# EUROPÄISCHE PATENTSCHRIFT

(11) **EP 4 193 071 B1**
(45) Veröffentlichungstag und Bekanntmachung des Hinweises auf die Patenterteilung: **26.06.2024**
(21) Anmeldenummer: 21749583.7
(22) Anmeldetag: 26.07.2021
(51) Int. Cl.: F16C 19/16, F16C 19/54, F16C 19/56, H02K 7/116, H02K 7/08, H02K 7/00, F16H 57/02

(54) **ANTRIEBSEINHEIT FÜR EIN FAHRZEUG**
DRIVE UNIT FOR A VEHICLE
UNITÉ D'ENTRAÎNEMENT POUR VÉHICULE

(30) Priorität: 10.08.2020 DE 102020210110
(43) Veröffentlichungstag der Anmeldung: 14.06.2023
(73) Patentinhaber: Robert Bosch GmbH, 70442 Stuttgart (DE)
(72) Erfinder: KIEKBUSCH, Timo, 71638 Ludwigsburg (DE); JUNG, Philipp, 74321 Bietigheim-Bissingen (DE); KOCHERSCHEIDT, Johannes Daniel, 74232 Abstatt (DE)
(86) Internationale Anmeldenummer: PCT/EP2021/070787
(87) Internationale Veröffentlichungsnummer: WO 2022/033847

(56) Entgegenhaltungen:
- US-A1- 2016 099 632
- US-A1- 2021 164 554

## Beschreibung

### Stand der Technik

Die Erfindung betrifft eine Antriebseinheit für ein Fahrzeug nach dem Oberbegriff des Anspruchs 1.

Eine Antriebseinheit für ein Fahrzeug ist aus DE 10 2016 206 479 A1 bekannt. Diese Antriebseinheit weist eine elektrische Maschine mit einer Rotorwelle und eine Getriebevorrichtung mit einer doppelt gelagerten und ein integrales Ritzel aufweisenden Getriebeeingangswelle auf, wobei die Rotorwelle und die Getriebeeingangswelle ineinander gesteckt werden. Bei der Montage, bei der ein Montagedorn zum Einsatz kommt und zuerst die Getriebevorrichtung in das Getriebegehäuse montiert wird, muss eine genaue Montagereihenfolge eingehalten werden. Eine weitere Antriebseinheit für ein Fahrzeug ist aus US 2016/099632 A1 bekannt.

### Offenbarung der Erfindung

Das der Erfindung zugrunde liegende Problem wird durch eine Antriebseinheit für ein Fahrzeug mit den Merkmalen des Anspruchs 1 gelöst. Vorteilhafte Weiterbildungen der Erfindung sind in Unteransprüchen genannt.

Erfindungsgemäß wird eine Antriebseinheit für ein Fahrzeug vorgeschlagen, die eine elektrische Maschine mit einer Rotorwelle und ein Getriebe mit einer (zur Rotorwelle separaten) Getriebewelle aufweist. Die Getriebewelle ist mittels eines ersten Wälzlagers drehbar in einem ersten Gehäuseabschnitt gelagert und die Rotorwelle ist mittels eines zweiten Wälzlagers drehbar in einem zweiten Gehäuseabschnitt gelagert.

Die Getriebewelle und die Rotorwelle sind drehfest miteinander gekoppelt, wobei am (axialen) Übergang zwischen Getriebewelle und Rotorwelle ein drittes Wälzlager angeordnet ist, welches einen Lagerinnenring aufweist, wobei der Lagerinnenring mit seiner Innenfläche an der Rotorwelle und an der Getriebewelle anliegt.

Somit werden die Getriebewelle und die Rotorwelle (axial abschnittsweise) im Innenring des dritten Lagers aufgenommen und der Innenring des dritten Wälzlagers stützt die Getriebewelle und die Rotorwelle in radialer Richtung ab. Eine Zentrierung der beiden Wellen kann somit direkt im dritten Wälzlager an der Innenfläche des Lagerinnenrings erfolgen.

Dadurch können die elektrische Maschine und das Getriebe eigenständig montiert werden. Dies erlaubt eine höhere Flexibilität in der Montagereihenfolge der Antriebseinheit, da wahlweise ein Aufbau der elektrischen Maschine mit anschließender Montage des Getriebes oder ein Aufbau des Getriebes mit anschließender Montage der elektrischen Maschine erfolgen kann. Durch die Zentrierung von Getriebewelle und Rotorwelle im Lagerinnenring kann auf zusätzliche Zentrierelemente (bspw. Zentrierfläche) zur Führung der beiden Wellen zueinander verzichtet werden. Zudem kann durch die Führung der Wellen durch das dritte Wälzlager eine höhere Laufgenauigkeit (geringere koaxiale Toleranz) erreicht werden als bei einer Führung der Rotorwelle mittels der Getriebewelle.

Bei der Innenfläche des Lagerinnenrings kann es sich um eine Innenfläche mit einem (axial) durchgehend gleichbleibendem Innendurchmesser oder um eine gestufte Innenfläche mit verschiedenen Innendurchmessern handeln. Bei dem ersten Gehäuseabschnitt kann es sich um ein Gehäuse des Getriebes (Getriebegehäuse) handeln. Bei dem zweiten Gehäuseabschnitt kann es sich um ein Gehäuse der elektrischen Maschine handeln (Motorgehäuse).

Wie bereits angedeutet, sind die Rotorwelle und die Getriebewelle koaxial zueinander angeordnet. Bei der Getriebewelle kann es sich um eine Eingangswelle des Getriebes handeln.

Die Rotorwelle und die Getriebewelle sind separat voneinander ausgebildet und werden bei der Montage der Antriebseinheit drehfest miteinander gekoppelt. Durch separate Ausgestaltung von Getriebewelle und Rotorwelle kann eine beanspruchungsgerechte Auswahl der Werkstoffe der Wellen erfolgen. Zudem können die Wellen separat bearbeitet und ggf. separat wärmebehandelt werden (geringere Massen der Wellen als bei einteiliger Ausgestaltung). Zudem kann eine höhere Flexibilität bei Ausgestaltung von Laufverzahnungsdurchmesser, Dichtungsdurchmesser, Lagerdurchmesser oder einer Parksperrenanbindung erreicht werden.

Das erste Wälzlager kann am von der Rotorwelle abgewandten Ende der Getriebewelle angeordnet sein. Das zweite Wälzlager kann am von der Getriebewelle abgewandten Ende der Rotorwelle angeordnet sein. Das dritte Wälzlager kann axial zwischen dem erstem und dem zweitem Wälzlager angeordnet sein.

Die Getriebewelle kann zur Drehmomentübertragung, bspw. auf eine weitere Getriebewelle, verzahnt sein, bspw. durch ein auf die Getriebewelle montiertes Zahnrad oder eine in der Getriebewelle ausgebildete, bspw. eingeschnittene, Verzahnung.

Die Antriebseinheit kann weitere Komponenten aufweisen. So kann die elektrische Maschine einen Rotor aufweisen, der drehfest mit der Rotorwelle gekoppelt ist. Zudem kann die elektrische Maschine einen Stator aufweisen, der elektromagnetisch mit dem Rotor interagiert. Bei dem Getriebe kann es sich um ein einstufiges oder mehrstufiges Getriebe, bspw. ein Stirnradgetriebe handeln. Die Antriebseinheit kann eine elektrische Achse für ein Fahrzeug bilden.

Erfindungsgemäß sitzt das dritte Wälzlager, insbesondere zum axial überwiegenden Teil, auf der Getriebewelle, wobei der Lagerinnenring an der von der Rotorwelle abgewandten Seite an einem radialen Vorsprung anliegt. Dadurch können auf die Getriebewelle einwirkende Radial- und Axialkräfte, die bspw. von einer Verzahnung oder einer Parksperre an der Getriebewelle ausgehen, direkt in das dritte Wälzlager eingeleitet werden. Eine weitere Schnittstelle zur Übertragung der Kräfte kann somit entfallen. Der Vorsprung ist durch einen relativ zum Lagersitz radial vorstehenden Wellenabsatz ausgebildet. Das dritte Wälzlager kann im ersten Gehäuseabschnitt angeordnet sein und somit Getriebewelle und Rotorwelle drehbar in dem ersten Gehäuseabschnitt lagern.

Gemäß einer Weiterbildung können das erste Wälzlager und das dritte Wälzlager in X-Anordnung oder in O-Anordnung im ersten Gehäuseabschnitt angeordnet sein. Somit können bspw. aus der Laufverzahnung stammende Axialkräfte in Schub- und Zugbetrieb jeweils über ein Wälzlager von der Getriebewelle in den ersten Gehäuseabschnitt (bspw. Getriebegehäuse) eingeleitet werden. Auf die Getriebewelle einwirkende Radialkräfte werden direkt von der Getriebewelle über die Wälzlager im ersten Gehäuseabschnitt abgestützt.

Optional können das erste Wälzlager, das zweite Wälzlager und/oder das dritte Wälzlager relativ zu dem Gehäuseabschnitt, in dem das jeweilige Wälzlager angeordnet ist, axial vorgespannt sein, insbesondere mittels Federn oder Shimscheiben. Dies trägt zu einer Aufnahme von Axialkräften bei.

Gemäß einer Weiterbildung können die Getriebewelle und die Rotorwelle axial aneinander befestigt sein (axial feste Kopplung), wobei ein Lager von erstem Wälzlager und drittem Wälzlager als Loslager ausgebildet ist und das jeweils andere Lager als Festlager. Somit können Spannungen durch Wärmeausdehnung abgebaut und Fertigungstoleranzen ausgeglichen werden. Gemäß einer Weiterbildung kann die Rotorwelle mit einer äußeren Umfangsfläche an der Innenfläche des Lagerinnenrings des dritten Wälzlagers anliegen, wobei sich die Rotorwelle mit einem radialen Absatz (in Axialrichtung orientierte Stirnfläche) axial am Lagerinnenring des dritten Wälzlagers oder an der Getriebewelle abstützt. Somit können Axialkräfte der Rotorwelle in Richtung der Getriebewelle mittels des Lagerinnenrings abgestützt werden. Der Lagersitz der Getriebewelle, d.h. der Abschnitt der Getriebewelle, an dem das dritte Wälzlager mit dem Lagerinnenring sitzt, und die äußere Umfangsfläche der Rotorwelle können einen identischen Außendurchmesser aufweisen. Somit kann der Lagerinnenring des dritten Wälzlagers einen axial gleichbleibenden Innendurchmesser aufweisen.

Gemäß einer Weiterbildung kann das dritte Wälzlager einen axial verlängerten Lagerinnenring aufweisen, der axial aus dem dritten Wälzlager herausragt. Somit wird bei gleicher radialer Baugröße des Wälzlagers durch eine hinreichend große Kontaktfläche ein sicherer Kontakt zur Rotorwelle und zur Getriebewelle ermöglicht. Dies trägt zu einer radial kompakten Bauweise bei.

Alternativ kann das dritte Wälzlager als größeres Wälzlager (bspw. in Standardbreite) ausgeführt sein als das erste Wälzlager und das dritte Wälzlager. Somit kann bei hinreichend großer Kontaktfläche zur Rotorwelle und zur Getriebewelle ein herkömmliches Wälzlager eingesetzt werden. Dies trägt zu einer kostengünstigen Bauweise bei. Bei Standardbreite können Lagerinnenring und Lageraußenring axial gleiche Abmessungen aufweisen.

Gemäß einer Weiterbildung kann das dritte Wälzlager am, ggf. axial verlängerten, Lagerinnenring einen Absatz mit vergrößertem Innendurchmesser aufweisen, wobei die Rotorwelle mit einer äußeren Umfangsfläche in diesem Absatz am Lagerinnenring anliegt. Somit ist eine Übertragung von Axialkraft von der Rotorwelle auf den Lagerinnenring möglich, ggf. ohne oder mit lediglich geringfügiger Schwächung des Querschnitts der Rotorwelle. Der Absatz ist insbesondere an dem der Rotorwelle zugewandten Ende des Innenrings ausgebildet.

Gemäß einer Weiterbildung kann die Rotorwelle eine Stufe mit einem reduzierten Außendurchmesser aufweisen, wobei der Lagerinnenring des dritten Wälzlagers mit seinem Innenumfang in dieser Stufe an der Rotorwelle anliegt. Somit ist eine Übertragung von Axialkräften von der Rotorwelle auf den Lagerinnenring des dritten Wälzlagers möglich, ohne Querschnitt des Lagerinnenrings zu schwächen. Die Stufe an der Rotorwelle und der Lagersitz an der Getriebewelle, d.h. der Abschnitt der Getriebewelle, an dem das dritte Wälzlager mit dem Lagerinnenring sitzt, können einen gleichen Durchmesser aufweisen. Die Stufe ist insbesondere an dem der Getriebewelle zugewandten Ende der Rotorwelle ausgebildet.

Gemäß einer Weiterbildung kann die Getriebewelle axial abschnittsweise oder vollständig als Hohlwelle ausgebildet sein. Somit kann die Getriebewelle eine zentrische Öffnung bzw. einen zentrischen Durchgang aufweisen. Hiermit ist eine Beölung bzw. Kühlung der Rotorwelle und/oder der Wellenverbindung, bspw. einer Steckverzahnung, möglich. In der Getriebewelle und/oder in der Rotorwelle können radiale Kanäle ausgebildet sein. Hiermit kann eine Beölung bzw. Kühlung von Lagern und/oder Dichtungen erfolgen. Unabhängig davon ist denkbar, dass die Rotorwelle axial abschnittsweise oder vollständig als Hohlwelle ausgebildet ist.

Gemäß einer Weiterbildung können die Rotorwelle und die Getriebewelle stoffschlüssig (bspw. mittels Verschweißen), formschlüssig (bspw. mittels einer Steckverzahnung) und/oder kraftschlüssig (bspw. mittels eines Pressverbands) miteinander verbunden sein. Hiermit ist eine konstruktiv einfache und stabile Verbindung der Wellen ermöglicht.

Getriebewelle und Rotorwelle können einander axial überlappen und im überlappenden Bereich miteinander verbunden sein. An der Rotorwelle kann ein axial abragender Zapfen ausgebildet sein, der im zusammengesetzten Zustand der Wellen in die Öffnung bzw. den Durchgang der Getriebewelle hineinragt. Am Innenumfang der Getriebewelle kann eine Innenverzahnung ausgebildet sein und am Außenumfang des Zapfens kann eine Außenverzahnung ausgebildet sein. Innenverzahnung und Außenverzahnung bilden im zusammengesteckten Zustand eine Steckverzahnung aus.

Nachfolgend werden mögliche Ausführungsformen der Erfindung unter Bezugnahme auf die beiliegenden Zeichnungen erläutert. Es zeigen:
- Figur 1: einen schematischen Schnitt durch eine Antriebseinheit für ein Fahrzeug; und
- Figur 2a - 2d: Möglichkeiten zur Ausgestaltung der Lagerung von Rotorwelle und Getriebewelle am dritten Wälzlager der Antriebseinheit aus Figur 1.

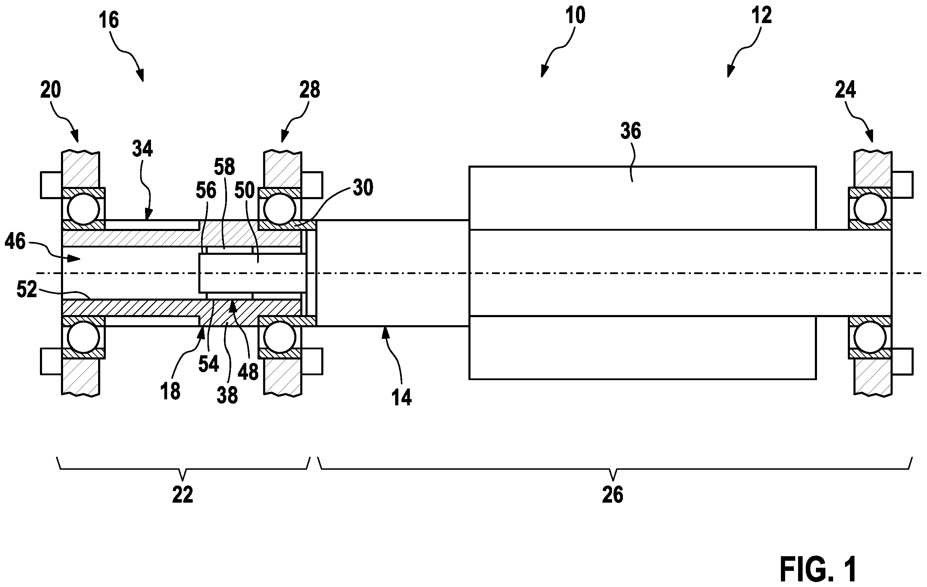

Eine Antriebseinheit für ein Fahrzeug trägt in Figur 1 insgesamt das Bezugszeichen 10. Die Antriebseinheit 10 weist eine elektrische Maschine 12 mit einer Rotorwelle 14 und ein Getriebe 16 mit einer zur Rotorwelle 14 separaten Getriebewelle 18 auf. Die Getriebewelle 18 ist mittels eines ersten Wälzlagers 20 drehbar in einem ersten Gehäuseabschnitt 22 (nicht dargestellt) gelagert und die Rotorwelle 14 ist mittels eines zweiten Wälzlagers 24 drehbar in einem zweiten Gehäuseabschnitt 26 (nicht dargestellt) gelagert. Bei dem ersten Gehäuseabschnitt 22 kann es sich um ein Gehäuse des Getriebes 16 und bei dem zweiten Gehäuseabschnitt 26 um ein Gehäuse der elektrischen Maschine 12 handeln (Gehäuse jeweils nicht dargestellt). Die Gehäuse können ein oder mehrere (ebenfalls nicht gezeigte) Gehäusewandungen aufweisen, in denen Lagersitze (ohne Bezugszeichen) für die Wälzlager 20, 24, 28 ausgebildet sind (Lagersitze durch Schraffur angedeutet).

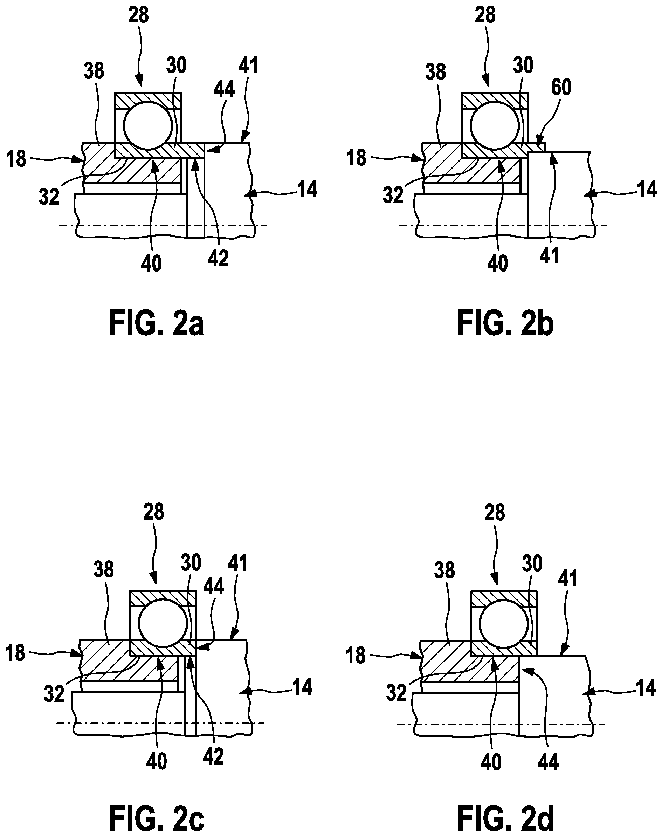

Die Getriebewelle 18 und die Rotorwelle 14 sind drehfest miteinander gekoppelt, wobei am axialen Übergang zwischen Getriebewelle 18 und Rotorwelle 14 ein drittes Wälzlager 28 angeordnet ist, welches einen Lagerinnenring 30 aufweist, wobei der Lagerinnenring 30 mit seiner Innenfläche 32 an der Rotorwelle 14 und an der Getriebewelle 18 anliegt (vgl. Fig.2a).

Bei der Innenfläche 32 des Lagerinnenrings kann es sich um eine Innenfläche 32 mit einem (axial) durchgehend gleichbleibendem Innendurchmesser oder um eine gestufte Innenfläche 32 mit verschiedenen Innendurchmessern handeln. Die Rotorwelle 14 und die Getriebewelle 18 sind koaxial zueinander angeordnet. Bei der Getriebewelle 18 kann es sich um eine Eingangswelle des Getriebes handeln.

Das erste Wälzlager 20 ist am von der Rotorwelle 14 abgewandten Ende der Getriebewelle 18 angeordnet. Das zweite Wälzlager 24 ist am von der Getriebewelle 18 abgewandten Ende der Rotorwelle 14 angeordnet. Das dritte Wälzlager 28 ist axial zwischen den Wälzlagern 20, 24 angeordnet. Die Getriebewelle 18 weist im Beispiel zur Drehmomentübertragung eine in der Getriebewelle 18 eingeschnittene Verzahnung 34 auf.

Die elektrische Maschine 12 weist ein Rotor 36 auf, der drehfest mit der Rotorwelle 14 gekoppelt ist. Zudem weist die elektrische Maschine 12 einen (nicht dargestellten) Stator auf, der elektromagnetisch mit dem Rotor 36 interagiert. Die Antriebseinheit 10 bildet im Beispiel eine elektrische Achse für ein Fahrzeug.

Das dritte Wälzlager 28 sitzt zum axial überwiegenden Teil auf der Getriebewelle 18, wobei der Lagerinnenring 30 an der von der Rotorwelle 14 abgewandten Seite an einem radialen Vorsprung 38 anliegt. Der Vorsprung 38 ist im Beispiel durch einen relativ zum Lagersitz 40, d.h. dem Abschnitt der Getriebewelle 18, an dem das dritte Wälzlager 28 mit dem Lagerinnenring 30 sitzt, radial vorstehenden Wellenabsatz ausgebildet.

Das dritte Wälzlager 28 ist im ersten Gehäuseabschnitt 22 angeordnet und lagert Getriebewelle 18 und Rotorwelle 14 drehbar im ersten Gehäuseabschnitt 22. Das erste Wälzlager 20 und das dritte Wälzlager 28 sind im Beispiel in X-Anordnung im ersten Gehäuseabschnitt 22 angeordnet. Optional können die Wälzlager 20, 24, 28 axial vorgespannt sein, wie oben erläutert.

Die Getriebewelle 18 und die Rotorwelle 14 sind axial aneinander befestigt, wobei ein Lager von erstem Wälzlager 20 und drittem Wälzlager 28 als Loslager ausgebildet ist und das jeweils andere Lager als Festlager (nicht im Einzelnen dargestellt).

Die Lagerung am dritten Wälzlager 28 gemäß Fig.1 ist in Fig.2a vergrößert gezeigt. Das dritte Wälzlager 28 weist einen axial verlängerten Lagerinnenring 30 auf, der axial aus dem Wälzlager 28 herausragt. Die Rotorwelle 14 weist eine Stufe 42 mit einem gegenüber der äußeren Umfangsfläche 41 reduzierten Außendurchmesser auf, wobei der Lagerinnenring 30 des dritten Wälzlagers 28 mit seiner Innenfläche 32 in dieser Stufe 42 an der Rotorwelle 14 anliegt. Die Rotorwelle 14 stützt sich mit einem radialen Absatz 44 stirnseitig am (verlängerten) Lagerinnenring 30 des Wälzlagers 28 ab. Der Lagersitz 40 der Getriebewelle 18 und die Stufe 42 der Rotorwelle 14 weisen im Beispiel einen identischen Außendurchmesser auf. Der Lagerinnenring 30 weist an der Innenfläche 32 einen axial gleichbleibenden Innendurchmesser auf.

Die Getriebewelle 18 ist als Hohlwelle mit einem zentrischen Durchgang 46 ausgebildet (vgl. Fig.1). Hiermit ist eine Beölung bzw. Kühlung der Rotorwelle 14 und ggf. auch der Wellenverbindung möglich, wie oben erläutert.

Die Rotorwelle 14 und die Getriebewelle 18 sind im Beispiel formschlüssig, und zwar mittels einer Steckverzahnung 48 miteinander verbunden (vgl. Fig.1). Die Getriebewelle 18 und Rotorwelle 14 überlappen einander axial und sind im überlappenden Bereich miteinander verbunden. An der Rotorwelle 14 ist ein axial abragender Zapfen 50 ausgebildet, der im zusammengesetzten Zustand der Wellen 14, 18 in den Durchgang 46 der Getriebewelle 18 hineinragt.

Am Innenumfang 52 der Getriebewelle 18 ist eine Innenverzahnung 54 ausgebildet und am Außenumfang 56 des Zapfens 50 ist eine Außenverzahnung 58 ausgebildet. Die Innenverzahnung 54 und die Außenverzahnung 58 bilden im zusammengesteckten Zustand die Steckverzahnung 48 aus.

Die Figuren 2b bis 2d zeigen verschiedene Ausgestaltungsmöglichkeiten der Lagerung am dritten Wälzlager 28. Gleiche oder funktional gleiche Elemente sind mit identischen Bezugszeichen versehen, so dass zur Vermeidung von Wiederholungen auf die voranstehenden Ausführungen verwiesen wird.

An der Lagerung gemäß Figur 2b weist die Rotorwelle 14 im Unterschied zu Figur 2a keinen radialen Absatz 44 auf. Stattdessen weist das dritte Wälzlager 28 am (axial verlängerten) Lagerinnenring 30 einen Absatz 60 mit vergrößertem Innendurchmesser auf, wobei die Rotorwelle 14 mit ihrer äußeren Umfangsfläche 41 in diesem Absatz 60 am Lagerinnenring 30 anliegt. Der Absatz 60 ist an dem der Getriebewelle 18 zugewandten Ende der Rotorwelle 14 ausgebildet.

Bei der Lagerung gemäß Figur 2c ist der Lagerinnenring 30 im Unterschied zu Figur 2a axial nicht verlängert, so dass dieser nicht axial über das dritte Wälzlager 28 herausragt. Der Lagerinnenring 30 liegt mit seiner Innenfläche 32 in der Stufe 42 an der Rotorwelle 14 an. Die Rotorwelle 14 stützt sich mit einem radialen Absatz 44 stirnseitig am Lagerinnenring 30 des Wälzlagers 28 ab. Im Vergleich zu der Lagerung in Figur 2a ist das Wälzlager 28 in Figur 2c mehr in Richtung Rotorwelle 14 gerückt.

Bei der Lagerung gemäß Figur 2d weist die Rotorwelle 14 im Unterschied zu Figur 2a keinen radialen Absatz 44 auf, mit dem die Rotorwelle 14 stirnseitig am Lagerinnenring 30 anliegt. Stattdessen stützt sich die Rotorwelle 14 mit einem radialen Absatz 44 stirnseitig an der Getriebewelle 18 ab. Die äußere Umfangsfläche 41 der Rotorwelle 14 und der Lagersitz 40 der Getriebewelle 18 weisen einen identischen Außendurchmesser auf. Der Lagerinnenring 30 ist axial nicht verlängert, so dass dieser axial nicht aus dem Wälzlager 30 herausragt. Der Lagerinnenring 30 weist an der Innenfläche 32 einen axial gleichbleibenden Innendurchmesser auf.

## Patentansprüche

1. Antriebseinheit (10) für ein Fahrzeug, mit einer elektrischen Maschine (12) mit einer Rotorwelle (14) und einem Getriebe (16) mit einer Getriebewelle (18), wobei die Getriebewelle (18) mittels eines ersten Wälzlagers (20) drehbar in einem ersten Gehäuseabschnitt (22) gelagert ist und die Rotorwelle (14) mittels eines zweiten Wälzlagers (24) drehbar in einem zweiten Gehäuseabschnitt (26) gelagert ist, wobei die Getriebewelle (18) und die Rotorwelle (14) drehfest miteinander gekoppelt sind, wobei am Übergang zwischen Getriebewelle (18) und Rotorwelle (14) ein drittes Wälzlager (28) angeordnet ist, welches einen Lagerinnenring (30) aufweist, wobei der Lagerinnenring (30) mit seiner Innenfläche (32) an der Rotorwelle (14) und an der Getriebewelle (18) anliegt, **dadurch gekennzeichnet, dass** das dritte Wälzlager (28) auf der Getriebewelle (18) sitzt, wobei der Lagerinnenring (30) an der von der Rotorwelle (14) abgewandten Seite an einem radialen Vorsprung (38) anliegt, wobei der Vorsprung als ein radial vorstehender Wellenabsatz der Getriebewelle ausgebildet ist.

2. Antriebseinheit (10) nach Anspruch 1, **dadurch gekennzeichnet, dass** das erste Wälzlager (20) und das dritte Wälzlager (28) in X-Anordnung oder O-Anordnung im ersten Gehäuseabschnitt (22) angeordnet sind.

3. Antriebseinheit (10) nach einem der voranstehenden Ansprüche, **dadurch gekennzeichnet, dass** die Getriebewelle (18) und die Rotorwelle (14) axial aneinander befestigt sind, wobei ein Lager von erstem Wälzlager (20) und drittem Wälzlager (28) als Loslager ausgebildet ist und das jeweils andere Lager als Festlager.

4. Antriebseinheit (10) nach einem der voranstehenden Ansprüche, **dadurch gekennzeichnet, dass** die Rotorwelle (18) mit einer äußeren Umfangsfläche (41) an der Innenfläche (32) des Lagerinnenrings (30) des dritten Wälzlagers (28) anliegt, wobei sich die Rotorwelle (14) mit einem radialen Absatz (44) axial am Lagerinnenring (30) des dritten Wälzlagers (28) oder an der Getriebewelle (18) abstützt.

5. Antriebseinheit (10) nach einem der voranstehenden Ansprüche, **dadurch gekennzeichnet, dass** das dritte Wälzlager (28) einen axial verlängerten Lagerinnenring (30) aufweist, der axial aus dem dritten Wälzlager (28) herausragt oder dass das dritte Wälzlager (28) als größeres Wälzlager ausgeführt ist als das erste Wälzlager (20) und das zweite Wälzlager (24).

6. Antriebseinheit (10) nach Anspruch 6, **dadurch gekennzeichnet, dass** das dritte Wälzlager (28) am Lagerinnenring (30) einen Absatz (60) mit vergrößertem Innendurchmesser aufweist, wobei die Rotorwelle (14) mit einer äußeren Umfangsfläche (41) in diesem Absatz (60) am Lagerinnenring (30) anliegt.

7. Antriebseinheit (10) nach einem der voranstehenden Ansprüche, **dadurch gekennzeichnet, dass** die Rotorwelle (14) eine Stufe (42) mit einem reduzierten Außendurchmesser aufweist, wobei der Lagerinnenring (30) des dritten Wälzlagers (28) mit seiner Innenfläche (32) in dieser Stufe (42) an der Rotorwelle (14) anliegt.

8. Antriebseinheit (10) nach einem der voranstehenden Ansprüche, **dadurch gekennzeichnet, dass** die Getriebewelle (18) axial abschnittsweise oder vollständig als Hohlwelle ausgebildet ist.

9. Antriebseinheit (10) nach einem der voranstehenden Ansprüche, **dadurch gekennzeichnet, dass** die Rotorwelle (14) und die Getriebewelle (18) stoffschlüssig, formschlüssig und/oder kraftschlüssig miteinander verbunden sind.

## Claims

1. Drive unit (10) for a vehicle, having an electric machine (12) with a rotor shaft (14) and a transmission (16) with a transmission shaft (18), wherein the transmission shaft (18) is rotatably mounted in a first housing portion (22) by means of a first rolling bearing (20) and the rotor shaft (14) is rotatably mounted in a second housing portion (26) by means of a second rolling bearing (24), wherein the transmission shaft (18) and the rotor shaft (14) are coupled to one another for conjoint rotation, wherein a third rolling bearing (28), which has a bearing inner ring (30), is arranged at the transition between the transmission shaft (18) and rotor shaft (14), wherein the bearing inner ring (30) bears, by way of its inner face (32), on the rotor shaft (14) and on the transmission shaft (18), **characterized in that** the third rolling bearing (28) sits on the transmission shaft (18), wherein the bearing inner ring (30) bears, on the side facing away from the rotor shaft (14), on a radial protrusion (38), wherein the protrusion is designed as a radially projecting shaft shoulder of the transmission shaft.

2. Drive unit (10) according to Claim 1, **characterized in that** the first rolling bearing (20) and the third rolling bearing (28) are arranged in an X arrangement or an O arrangement in the first housing portion (22).

3. Drive unit (10) according to either of the preceding claims, **characterized in that** the transmission shaft (18) and the rotor shaft (14) are fastened axially adjacent to one another, wherein one bearing of the first rolling bearing (20) and third rolling bearing (28) is designed as a floating bearing and the respectively other bearing is designed as a fixed bearing.

4. Drive unit (10) according to one of the preceding claims, **characterized in that** the rotor shaft (18) bears, by way of an outer circumferential face (41), on the inner face (32) of the bearing inner ring (30) of the third rolling bearing (28), wherein the rotor shaft (14) is supported, by way of a radial shoulder (44), axially on the bearing inner ring (30) of the third rolling bearing (28) or on the transmission shaft (18).

5. Drive unit (10) according to one of the preceding claims, **characterized in that** the third rolling bearing (28) has an axially extended bearing inner ring (30), which axially protrudes from the third rolling bearing (28) or **in that** the third rolling bearing (28) is designed as a larger rolling bearing than the first rolling bearing (20) and the second rolling bearing (24).

6. Drive unit (10) according to Claim 6, **characterized in that** the third rolling bearing (28) has, on the bearing inner ring (30), a shoulder (60) with an increased inner diameter, wherein the rotor shaft (14) bears, by way of an outer circumferential face (41), in this shoulder (60) on the bearing inner ring (30).

7. Drive unit (10) according to one of the preceding claims, **characterized in that** the rotor shaft (14) has a step (42) with a reduced outer diameter, wherein the bearing inner ring (30) of the third rolling bearing (28) bears, by way of its inner face (32), in this step (42) on the rotor shaft (14).

8. Drive unit (10) according to one of the preceding claims, **characterized in that** the transmission shaft (18) is designed axially in certain portions or entirely as a hollow shaft.

9. Drive unit (10) according to one of the preceding claims, **characterized in that** the rotor shaft (14) and the transmission shaft (18) are connected to one another in an integrally bonded, form-fitting and/or force-fitting manner.

## Revendications

1. Unité d'entraînement (10) pour un véhicule, avec une machine électrique (12) avec un arbre de rotor (14) et une transmission (16) avec un arbre de transmission (18), l'arbre de transmission (18) étant logé de manière rotative dans une première section de boîtier (22) au moyen d'un premier palier à roulement (20) et l'arbre de rotor (14) étant logé de manière rotative dans une deuxième section de boîtier (26) au moyen d'un deuxième palier à roulement (24), l'arbre de transmission (18) et l'arbre de rotor (14) étant couplés l'un à l'autre de manière solidaire en rotation, un troisième palier à roulement (28) étant agencé à la transition entre l'arbre de transmission (18) et l'arbre de rotor (14), lequel présente une bague intérieure de palier (30), la bague intérieure de palier (30) s'appliquant par sa surface intérieure (32) contre l'arbre de rotor (14) et contre l'arbre de transmission (18), **caractérisée en ce que** le troisième palier à roulement (28) repose sur l'arbre de transmission (18), la bague intérieure de palier (30) s'appliquant contre une saillie radiale (38) sur le côté détourné de l'arbre de rotor (14), la saillie étant réalisée sous la forme d'un épaulement d'arbre en saillie radiale de l'arbre de transmission.

2. Unité d'entraînement (10) selon la revendication 1, **caractérisée en ce que** le premier palier à roulement (20) et le troisième palier à roulement (28) sont agencés selon un agencement X ou un agencement en O dans la première section de boîtier (22).

3. Unité d'entraînement (10) selon l'une quelconque des revendications précédentes, **caractérisée en ce que** l'arbre de transmission (18) et l'arbre de rotor (14) sont fixés axialement l'un à l'autre, un palier du premier palier à roulement (20) et du troisième palier à roulement (28) étant réalisé sous forme de palier libre et l'autre palier respectif sous forme de palier fixe.

4. Unité d'entraînement (10) selon l'une quelconque des revendications précédentes, **caractérisée en ce que** l'arbre de rotor (18) s'applique par une surface périphérique extérieure (41) contre la surface intérieure (32) de la bague intérieure de palier (30) du troisième palier à roulement (28), l'arbre de rotor (14) s'appuyant axialement par un épaulement radial (44) sur la bague intérieure de palier (30) du troisième palier à roulement (28) ou sur l'arbre de transmission (18).

5. Unité d'entraînement (10) selon l'une quelconque des revendications précédentes, **caractérisée en ce que** le troisième palier à roulement (28) présente une bague intérieure de palier (30) prolongée axialement, qui dépasse axialement du troisième palier à roulement (28) ou **en ce que** le troisième palier à roulement (28) est réalisé sous forme de palier à roulement plus grand que le premier palier à roulement (20) et le deuxième palier à roulement (24).

6. Unité d'entraînement (10) selon la revendication 6, **caractérisée en ce que** le troisième palier à roulement (28) présente sur la bague intérieure de palier (30) un épaulement (60) avec un diamètre intérieur agrandi, l'arbre de rotor (14) s'appliquant par une surface périphérique extérieure (41) dans cet épaulement (60) sur la bague intérieure de palier (30).

7. Unité d'entraînement (10) selon l'une quelconque des revendications précédentes, **caractérisée en ce que** l'arbre de rotor (14) présente un gradin (42) avec un diamètre extérieur réduit, la bague intérieure de palier (30) du troisième palier à roulement (28) s'appliquant par sa surface intérieure (32) dans ce gradin (42) sur l'arbre de rotor (14).

8. Unité d'entraînement (10) selon l'une quelconque des revendications précédentes, **caractérisée en ce que** l'arbre de transmission (18) est réalisé axialement, par sections ou entièrement, sous forme d'arbre creux.

9. Unité d'entraînement (10) selon l'une quelconque des revendications précédentes, **caractérisée en ce que** l'arbre de rotor (14) et l'arbre de transmission (18) sont reliés l'un à l'autre par liaison de matière, par liaison de forme et/ou par liaison de force.
